# EUROPEAN PATENT APPLICATION

(11) **EP 4 682 849 A1**
(43) Date of publication of application: **21.01.2026**
(21) Application number: 25189781.5
(22) Date of filing: 16.07.2025
(51) Int. Cl.: G08B 3/10, G04G 13/02, G08B 21/22, G08B 21/24

(54) **SOUND PLAYBACK DEVICE, SOUND PLAYBACK METHOD, AND SOUND PLAYBACK PROGRAM**

(30) Priority: 16.07.2024 JP 2024113382
(71) Applicant: Nintendo Co., Ltd., Kyoto 601-8501 (JP)
(72) Inventor: KONDO, Masahiro, Kyoto, 601-8501 (JP); AKAMA, Tetsuya, Kyoto, 601-8501 (JP); ABE, Rui, Kyoto, 601-8501 (JP); HOSHI, Kento, Kyoto, 601-8501 (JP)
(74) Representative: Bardehle Pagenberg Partnerschaft mbB Patentanwälte Rechtsanwälte

(57) **Abstract**

A sound playback device 1 includes: a clock part 331 for measuring time; a storing part 32 configured to store an alarm time; a detection part 21 configured to detect an object in a noncontact manner; a calculation part 332 configured to calculate a magnitude of movement of the object based on detection results; a determination part 333 configured to determine whether a motion condition is satisfied, the motion condition being satisfied when a magnitude of movement of the object is greater than or equal to a certain magnitude; and a sound playback part (334) configured to play a sound. The sound playback part starts a first sound playback processing to play a first sound when the measured time reaches a time determined in accordance with the alarm time, and starts a second sound playback processing to play a second sound when the determination part determines that the motion condition is satisfied during execution of the first sound playback processing.

## Description

### FIELD

The present disclosure relates to a sound playback device, a sound playback method, and a sound playback program.

### BACKGROUND AND SUMMARY

Alarm devices which emit an alarm sound when a preset alarm time is reached and which stop the alarm sound when a sleeping individual performs a stop action such as rising are conventionally known.

When simply emitting an alarm sound alone, it would take too long for a user to wake up and be able to take the stop action, such as rising.
(1) A sound playback device, comprising:
   a clock part for measuring time;
   a storing part configured to store an alarm time set by a user;
   a detection part configured to detect an object in a non-contact manner;
   a calculation part configured to calculate a magnitude of movement of the object based on detection results by the detection part;
   a determination part configured to determine whether a motion condition is satisfied, the motion condition being satisfied when a magnitude of movement of the object calculated by the calculation part is greater than or equal to a certain magnitude; and
   a sound playback part configured to play a sound, wherein
   the sound playback part starts a first sound playback processing to play a first sound when the time measured by the clock part reaches a time determined in accordance with the alarm time, and starts a second sound playback processing to play a second sound, which is different from the first sound, when the determination part determines that the motion condition is satisfied during execution of the first sound playback processing.
(2) The sound playback device according to above (1), wherein the sound playback part reduces a volume of the first sound when it is determined that the motion condition is satisfied during playback of the first sound as compared to when it is determined that the motion condition is not satisfied.
(3) The sound playback device according to above (1) or (2), further comprising a counting part configured to count, during execution of the first sound playback processing, a time during which it is determined that the motion condition is satisfied by the determination part as a motion time, wherein
   the sound playback part stops the first sound playback processing when a stop condition is satisfied, the stop condition being satisfied when the motion time reaches a first time.
(4) The sound playback device according to above (3), wherein the sound playback part resumes the first sound playback processing when a resumption condition is satisfied, the resumption condition including at least one of a second time having elapsed after the first sound playback processing was stopped due to satisfaction of the stop condition, and a non-motion time, during which it is determined by the determination part that the motion condition is not satisfied, having reached a third time, which is shorter than the second time.
(5) The sound playback device according to above (4), wherein the determination part determines whether a leaving condition is satisfied based on the detection results by the detection part, the leaving condition being satisfied when an object moves from within a preset first region to outside the first region, and
   the sound playback part, when it is determined by the determination part that the leaving condition is satisfied, does not resume the first sound playback processing even if the resumption condition is satisfied thereafter.
(6) The sound playback device according to above (5), wherein when the determination part determines that the leaving condition is satisfied, the sound playback part executes a third sound playback processing to play a third sound, which is different from the first sound and the second sound, and when the determination part determines that the leaving condition is not satisfied, the sound playback part does not execute the third sound playback processing even if the stop condition is satisfied.
(7) The sound playback device according to any one of above (3) to (6), wherein the determination part determines whether a leaving condition is satisfied based on the detection results by the detection part, the leaving condition being satisfied when an object moves from within a preset first region to outside the first region, and
   the sound playback part:
   starts a fourth sound playback processing to play a fourth sound when the time measured by the clock part reaches a time determined in accordance with the alarm time,
   stops the first sound playback processing when the stop condition is satisfied or when it is determined that the leaving condition is satisfied during the playback of the first sound, and
   stops the fourth sound playback processing when it is determined that the leaving condition is satisfied during playback of the fourth sound.
(8) The sound playback device according to any one of above (3) to (7), wherein the sound playback part changes the first time based on the time during which it is determined by the determination part that the motion condition is not satisfied after the counting part starts counting the motion time.
(9) The sound playback device according to any one of above (3) to (8), wherein the counting part changes the motion time based on the time during which it is determined by the determination part that the motion condition is not satisfied after the counting part starts counting the motion time.
(10) The sound playback device according to above (9), wherein the counting part resets the motion time to zero when the time, during which it is determined by the determination part that the motion condition is not satisfied after the counting part starts counting the motion time, reaches a fourth time.
(11) The sound playback device according to any one of above (3) to (10), wherein the sound playback part plays the second sound a plurality of times during execution of the second sound playback processing from when the second sound playback processing starts until the first sound playback processing is stopped due to the stop condition being satisfied,
   the second sounds played a plurality of times are at least partially different sounds from each other, and
   the sound playback part changes the second sound in accordance with the motion time.
(12) The sound playback device according to any one of above (3) to (11), wherein the sound playback part plays the second sound a plurality of times during execution of the second sound playback processing from when the second sound playback processing starts until the first sound playback processing is stopped due to the stop condition being satisfied, and
   the sound playback part plays the second sound such that as a number of times the second sound has already been played during execution of the second sound playback processing increases, the time during which it is determined by the determination part that the motion condition is satisfied between one of the second sounds and the next second sound to be played becomes longer.
(13) The sound playback device according to above (1) or (2), further comprising a counting part configured to count, during execution of the first sound playback processing, a time during which it is determined that the motion condition is satisfied by the determination part as a motion time, wherein
   the sound playback part plays the second sound a plurality of times during the execution of the second sound playback processing, and the plurality of second sounds are at least partially different from each other, and
   the sound playback part changes the second sound in accordance with the motion time.
(14) The sound playback device according to above (13), wherein the counting part resets the motion time to zero when the time, during which it is determined by the determination part that the motion condition is not satisfied, reaches a fourth time after the counting part starts counting the motion time.
(15) The sound playback device according to any one of above (1) to (14), wherein the calculation part calculates a magnitude of movement of an object in a second region, which is narrower than a detection range of the detection part, based on detection results by the detection part.
(16) The sound playback device according to any one of above (1) to (15), wherein the storing part stores a plurality of different second sounds, and
   the sound playback part plays a second sound based on a selection by a user from among the plurality of different second sounds during execution of the second sound playback processing.
(17) The sound playback device according to above (16), wherein the storing part stores a plurality of sets, a plurality of different first sounds, and a plurality of different second sounds, and each set is associated with a first sound and a second sound that are different from those of the other sets, and
   the sound playback part plays a first sound associated with a set selected by a user during execution of the first sound playback processing, and plays a second sound associated with the set selected by the user during execution of the second sound playback processing.
(18) The sound playback device of any one of above (1) to (17), wherein the detection part includes a millimeter wave sensor,
   the millimeter wave sensor emits a radio wave signal and receives a reflected signal of the radio wave signal, and
   the calculation part calculates a magnitude of movement of an object based on at least one of a distance from the millimeter wave sensor to the object within a detection range, a direction in which the object is located relative to the millimeter wave sensor, and a relative speed of the object relative to the millimeter wave sensor, detected based on the radio wave signal and the reflected signal.
(19) The sound playback device according to any one of above (1) to (18), wherein the first sound is music and the second sound is a sound effect.
(20) The sound playback device according to any one of above (1) to (19), wherein the first sound is music, and the second sound is music different from the first sound, and
   the sound playback part stops playback of the first sound while the second sound is being played.
(21) A sound playback method, comprising:
   measuring time;
   storing an alarm time set by a user;
   detecting an object in a non-contact manner;
   calculating a magnitude of movement of the object based on detection results of the object;
   determining whether a motion condition is satisfied, the motion condition being satisfied when a magnitude of movement of the object is greater than or equal to a certain magnitude; and
   starting a first sound playback processing to play a first sound when the measured time reaches a time determined in accordance with the alarm time, and starting a second sound playback processing to play a second sound, which is different from the first sound, when it is determined that the motion condition is satisfied during the execution of the first sound playback processing.
(22) A sound playback program, for causing a computer to execute the steps of:
   measuring time;
   storing an alarm time set by a user;
   detecting an object in a non-contact manner;
   calculating a magnitude of movement of the object based on detection results of the object;
   determining whether a motion condition is satisfied, the motion condition being satisfied when a magnitude of movement of the object is greater than or equal to a certain magnitude; and
   starting a first sound playback processing to play a first sound when the measured time reaches a time determined in accordance with the alarm time, and starting a second sound playback processing to play a second sound, which is different from the first sound, when it is determined that the motion condition is satisfied during the execution of the first sound playback processing.

### BRIEF DESCRIPTION OF DRAWINGS

Embodiments of the present disclosure are best understood from the following detailed description when read with the accompanying figures. It is noted that, in accordance with the standard practice in the industry, various features are not drawn to scale. In fact, the dimensions of the various features may be arbitrarily increased or reduced for clarity of discussion.
FIG. 1 is a perspective view schematically showing a sound playback device.
FIG. 2 is a block diagram schematically showing a component configuration of a sound playback device.
FIG. 3 is a functional block diagram of a processor of a control part.
FIG. 4 is a view schematically showing a detection range of a non-contact sensor when a sound playback device is placed next to a bed on which a user sleeps.
FIG. 5 is a time chart showing the overall volume of sounds played by the sound playback device or the like.
FIG. 6 is a time chart showing the volume of each sound of FIG. 5.
FIG. 7 is a time chart showing the volume of action-inducing sounds and action sounds after action sound playback processing has been executed.
FIG. 8 is a time chart similar to FIG. 5, showing the overall volumes of sounds played by the sound playback device of the like.
FIG. 9 is a flowchart showing a part of a flow of a playback processing.
FIG. 10 is a flowchart showing part of a flow of a playback processing.
FIG. 11 is a flowchart showing part of a flow of a playback processing flow.

### DESCRIPTION OF EMBODIMENTS

The embodiments will be described in detail below with reference to the drawings. Note that in the following description, identical constituent elements have been assigned the same reference signs.

### Overall Configuration

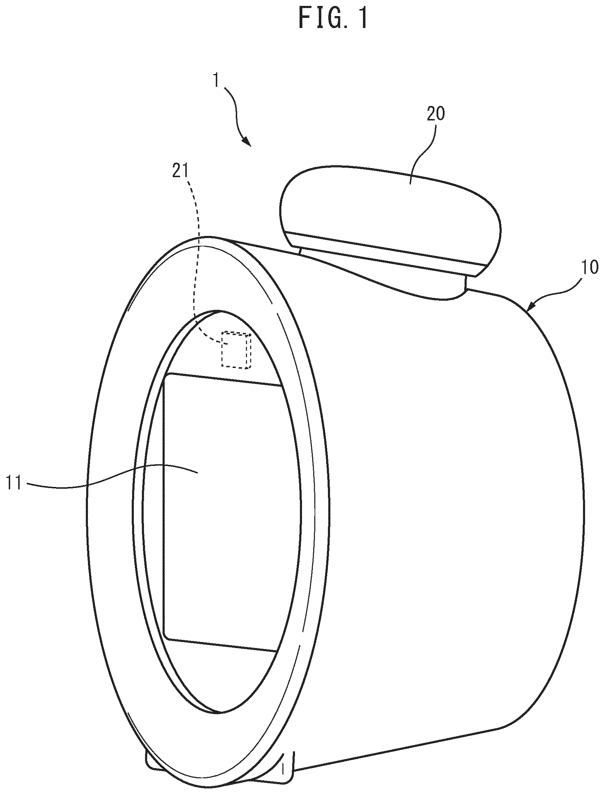

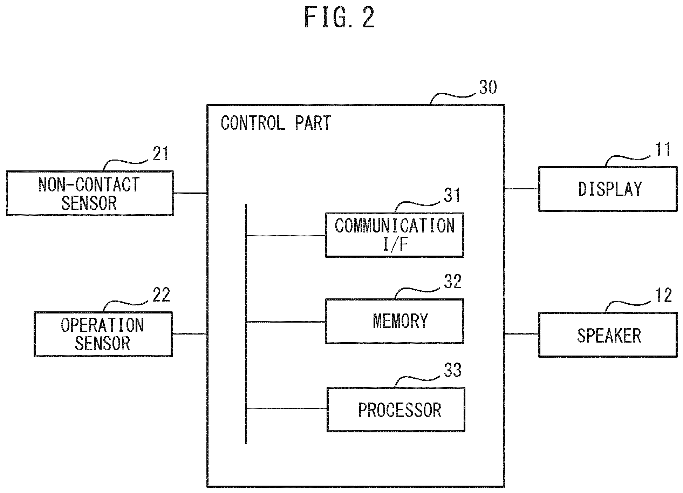

The configuration of a sound playback device 1 according to an embodiment will be described with reference to FIGS. 1 and 2. The sound playback device 1 is a device for outputting sound. The sound playback device 1 also has a clock function (timekeeping function) for measuring time. In the present embodiment, the sound playback device 1 is placed on an installation surface such as a table, a floor, a shelf, or a headboard of a bed while a user is asleep. Specifically, the sound playback device 1 is, for example, a desk clock, a music player, a television, a game device, or a monitor device. In particular, in the present embodiment, the sound playback device 1 is an alarm clock for waking up a user asleep in front of the sound playback device 1.

FIG. 1 is a perspective view schematically showing the sound playback device 1. As shown in FIG. 1, the sound playback device 1 includes a body 10, a display 11 provided in the body 10, and an operation part 20 provided on an upper part of the body 10. In the present embodiment, as shown in FIG. 1, the body 10 is configured as a cylindrical housing. However, the body 10 can be formed into any three-dimensional shape, such as a rectangular parallelepiped or semicylindrical shape.

The display 11 is arranged in the front surface of the body 10 so as to be visible by the user from the front thereof. For example, the current time is displayed on the display 11. The current time may be displayed by means of numbers or by means of hour and minute hands. Note that the sound playback device 1 need not have a display 11, and may have, for example, hands such as hour and minute hands and a dial, as long as the user can recognize the current time and an alarm time, which will be described later.

The operation part 20 is a member by means of which the user operates various functions of the sound playback device 1. In the present embodiment, the operation part 20 is a substantially cylindrical member provided above the body 10. The operation part 20 is attached so as to be capable of being pushed toward the body 10 and so as to be rotatable. When the user pushes the operation part 20 toward the body 10 or rotates it relative to the body 10, operation of various functions of the sound playback device 1 is performed. Note that any member may be provided as the operation part 20 as long as it is capable of operating various functions of the sound playback device 1. Thus, the operation part 20 may be, for example, a button, a switch, a cross key, a touch panel arranged on the screen of the display 11, etc.

FIG. 2 is a block diagram showing a schematic component configuration of the sound playback device 1. As shown in FIG. 2, the sound playback device 1 includes the display 11, a speaker 12, a non-contact sensor 21, an operation sensor 22, and a control part 30. The display 11, the speaker 12, the non-contact sensor 21, and the operation sensor 22 are electrically connected to the control part 30 via signal lines. The sound playback device 1 further includes a battery (not illustrated) for supplying power to the display 11, the control part 30, etc. Though the display 11, the speaker 12, the non-contact sensor 21, the operation sensor 22, and the control part 30 are housed in the body 10 in the present embodiment, a part thereof may not be housed in the body 10.

The display 11 is an example of an image display device for displaying an image. The display 11 is a device which is electrically connected to the control part 30 to display an image in accordance with an image signal from the control part 30. The display 11 displays an image in accordance with a computer program executed by the control part 30. The display 11 is, for example, a liquid crystal display, an EL (Electro Luminescence) display, or a plasma display.

The speaker 12 is an example of a sound generator for generating sound. The speaker 12 is electrically connected to the control part 30 and generates sound in accordance with a sound signal from the control part 30. The speaker 12 generates sound in accordance with the computer program executed by the control part 30.

The non-contact sensor 21 is a detection part configured to detect objects within a detection range in a non-contact manner. The non-contact sensor 21 is remote from the object. The object includes a body or body part of a human or other living being. The non-contact sensor 21 can detect, in a non-contact manner, the distance to an object in the detection range, the direction in which the object is located relative to the non-contact sensor 21, and the speed of the object, in a time series manner. In the present embodiment, the non-contact sensor 21 is arranged in a front part of the body 10, and detects objects within a detection range in front of the sound playback device 1. In particular, in the present embodiment, the non-contact sensor 21 detects, in a time series manner, at least one of the distance to the object, the direction in which the object is located, and the speed of the object. The non-contact sensor 21 may be self-contained. The non-contact sensor 21 outputs, for example, an output signal representing the object in the detection range. The output signal from the non-contact sensor 21 is input to the control part 30.

In the present embodiment, the non-contact sensor 21 is a millimeter wave sensor. A millimeter wave sensor transmits millimeter wave radio signals and receive reflected signals reflected by surrounding objects, and based on the transmitted radio signals and the received reflected signals, can detect at least one of the distance from the millimeter wave sensor to an object, the direction in which the object is located relative to the millimeter wave sensor, and the relative speed of the object relative to the millimeter wave sensor, in a time series manner. Specifically, the millimeter wave sensor can detect the positions of surrounding objects. The millimeter wave sensor transmits radio signals over a predetermined angle range, and receives reflected signals from objects located within a predetermined distance from the millimeter wave sensor. Thus, the detection range of the millimeter wave sensor is within the above-mentioned predetermined angle range in which the millimeter wave sensor transmits radio signals, and within the above-mentioned predetermined distance from the millimeter wave sensor. By using a millimeter wave sensor as the non-contact sensor 21 in this manner, the position and speed of an object, in particular, a user, can be detected in a non-contact manner, with a fast reaction speed and relatively high accuracy. It is also possible to calculate the movement of the object based on the position and speed of the object detected in a time series manner.

Note that a sensor other than a millimeter wave sensor, such as an infrared sensor, an ultrasonic sensor, or a microwave sensor, may be used as the non-contact sensor 21 as long as the distance to the object, the direction in which the object is located, and/or the speed of the object can be detected in a non-contact manner. Other types of sensors, such as a temperature sensor, may be used as the detection part instead of the non-contact sensor 21 as long as objects within the detection range can be detected in a non-contact manner. A sensor which can detect the movement of objects within the detection range may be used as the detection part instead of the non-contact sensor 21.

The operation sensor 22 is an example of an operation detection part configured to detect operations performed by the user on the operation part 20. In the present embodiment, when the operation part 20 is pressed by the user, the operation sensor 22 outputs an output signal indicating that the operation part 20 has been pressed. When the operation part 20 is rotated by the user, the operation sensor 22 outputs an output signal indicating the angle by which the operation part 20 has been rotated. The output signal from the operation sensor 22 is input to the control part 30.

The operation sensor 22 is a sensor corresponding to the type of the operation part 20. For example, when a button is used as the operation part 20, a sensor which changes the output signal depending on whether or not the button has been pressed is used as the operation sensor 22. When a touch panel is used as the operation part 20, a sensor which outputs an output signal indicating the position where a finger has touched the panel is used as the operation sensor 22.

### Control Part Configuration and Action

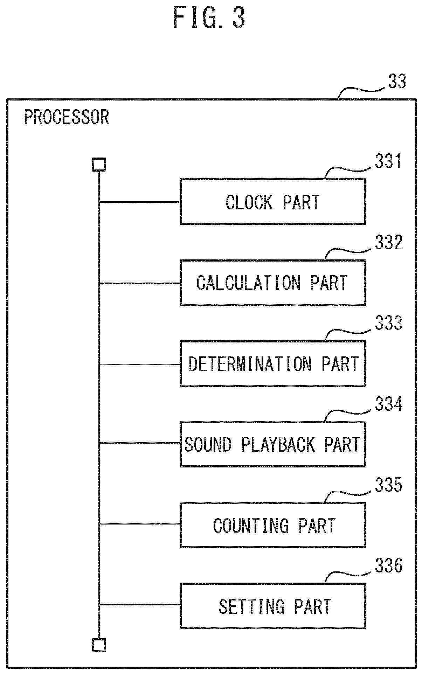

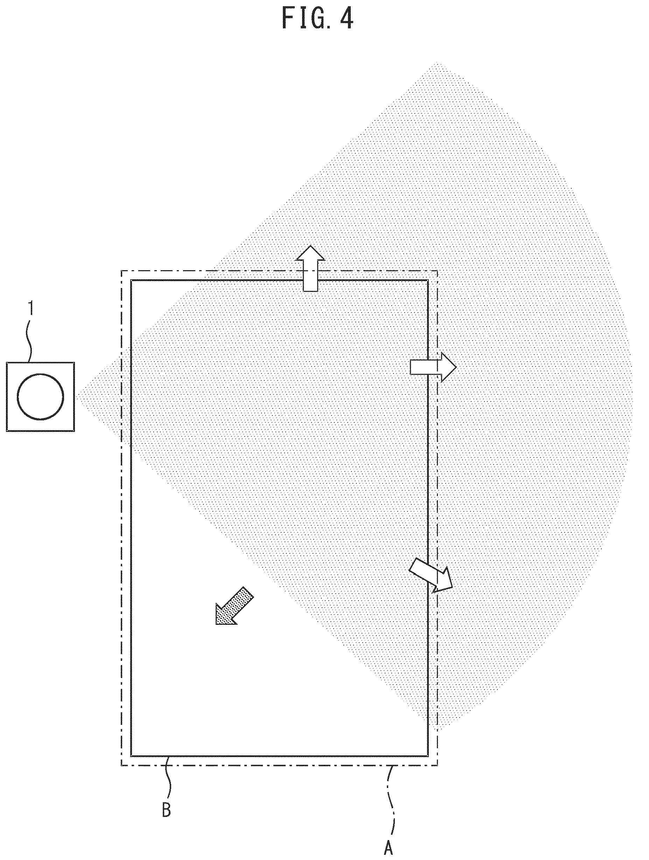

Next, the configuration and action of the control part 30 will be described with reference to FIGS. 3 and 4. The control part 30 transmits control signals to the display 11, speaker 12, etc., in accordance with the executed computer program, based on signals received from the non-contact sensor 21 and the operation sensor 22. The control part 30 includes a communication interface 31, a memory 32, and a processor 33. The communication interface 31, the memory 32, and the processor 33 may be separate circuits, or may be configured as a single integrated circuit.

The control part 30 controls the sound output by the speaker 12. In the present embodiment, the control part 30 plays different kinds of sounds, and specifically, an action-inducing sound, a background sound, an action sound, and a bed-exit sound, and outputs them from the speaker 12. In particular, in the present embodiment, the control part 30 plays the action-inducing sound, the background sound, the action sound, and the bed-exit sound at different timings and for different periods based on the detection results by the non-contact sensor 21, etc., to promote the awakening of a sleeping user.

The action-inducing sound is an example of a first sound that is played when the measured time reaches a time determined in accordance with the set alarm time, and is, for example, a sound effect (including a voice message). An example of an action-inducing sound is the sound of footsteps when a character is walking or running in a game. Note that the action-inducing sound may also be music.

The action-inducing sound may be stopped when it is determined that continuous movement of an object of a certain magnitude or greater is occurring during playback thereof, or may be played again when a predetermined snooze time has elapsed after the action-inducing sound was stopped.

The background sound is an example of a fourth sound that is played when the measured time reaches a time determined in accordance with the set alarm time and the playback of which is not stopped even if there is a certain magnitude of movement of the object. Note that the fourth sound is included in the first sound that is played when the measured time reaches a time determined in accordance with the set alarm time. Thus, the background sound is also an example of the first sound.

The background sound is not stopped even if a certain magnitude of movement of an object is detected during playback of the background sound, but is stopped when it is determined that an object is moving from within a predetermined sleep region to outside the sleep region. The background sound is a sound different from the action-inducing sound, the action sound, and the bed-exit sound, and is, for example, music. Note that the background sound may also be a sound effect.

The action sound is an example of a second sound that is played when it is determined that there is a certain magnitude of movement of an object based on the detection results of the non-contact sensor 21. Specifically, the action sound is played when the body of the user is moving significantly, not when the user is simply breathing. The action sound is a sound that is different from an action-inducing sound, and is, for example, a sound effect (including a voice message). The action sound is, for example, a sound effect that is played in association with the action of a character in an arbitrary game. Specifically, the action sound is, for example, a sound effect that is played when a character jumps, a sound effect that is played when a character operates an item, a sound effect that is played when an enemy character is attacked, and a sound effect that is played when a character acquires an item, in an arbitrary game.

Note that the action sound may be music. In particular, when both the action-inducing sound and the action sound are music, the action sound is music different from the music of the action-inducing sound. In this case, the action sound is, for example, related to the music of the action-inducing sound, but is music different from the music of the action-inducing sound. Specifically, for example, the music of the action-inducing sound is a piece of music with no vocals added, and the action sound is the same piece of music as the action-inducing sound, but with vocals added.

The bed-exit sound is an example of a third sound that is played when an object that was detected in a predetermined sleep region is no longer detected in the predetermined sleeping region and is detected outside the predetermined sleep region based on the detection results of the non-contact sensor 21, or when it is determined that there is movement of an object moving from inside the predetermined sleep region to outside the sleep region. For example, the bed-exit sound is played when the user exits the bed. The bed-exit sound is a sound that is different from the action-inducing sound and the action sound, and is, for example, a sound effect. In particular, the bed-exit sound is a sound effect (including a voice message) that is played when something is accomplished. The bed-exit sound is, for example, a sound effect that is played when an arbitrary stage is cleared in an arbitrary game. Specifically, the bed-exit sound is, for example, fanfare. The bed-exit sound may be music.

The communication interface 31 is a circuit for connecting the control part 30 to other electronic parts in the body 10, and specifically, the display 11, the speaker 12, the non-contact sensor 21, and the operation sensor 22.

The memory 32 is an example of a storing part configured to store data. The memory 32 is a storage medium for storing data, and includes, for example, a volatile semiconductor memory or a non-volatile semiconductor memory. The memory 32 may include a removable medium, such as a memory card or an optical disk. The memory 32 stores the computer program executed by the processor 33. The memory 32 also stores various data used by the executed program, such as the output signal from the non-contact sensor 21, etc.

The memory 32 stores data of sounds to be played by the control part 30. In particular, the memory 32 stores data of the action-inducing sound, action sound, bed-exit sound, and background sound described above. Thus, the processor 33 obtains data of sounds to be played from the memory 32, and plays the sounds based on the obtained data, and thereby the sounds are output from the speaker 12.

In the present embodiment, the memory 32 stores a plurality of sets, a plurality of different action-inducing sounds, a plurality of different action sounds, a plurality of different bed-exit sounds, and a plurality of different background sounds. The memory 32 stores these sounds and images to be displayed on the display in association with an individual set. Thus, each set is associated with an action-inducing sound different from other sets, an action sound different from other sets, a bed-exit sound different from other sets, and a background sound different from other sets.

Specifically, for example, the plurality of sets correspond to a plurality of different games, and sounds and images related to each game are stored in the memory 32 in association with the sets. For example, a certain set is associated with the footsteps of a character in a game corresponding to the set as an action-inducing sound, an action sound such as jumping of a character in the game as an action sound, a sound effect when a stage of the game is cleared as a bed-exit sound, and the background music of the game as a background sound. A set corresponding to a certain game is associated with an image of a character in the game or an image of an item used in the game. Note that a plurality of sets may correspond to one game. In this case, a plurality of different sets corresponding to the same game may include partially identical sounds.

The memory 32 need not store sets. In this case, the memory 32 stores the plurality of different action-inducing sounds, the plurality of different action sounds, the plurality of different bed-exit sounds, and the plurality of different background sounds, regardless of the set. Alternatively, the memory 32 may store one each of the action-inducing sound, the action sound, the bed-exit sound, and the background sound.

In the present embodiment, the memory 32 stores various settings by the user. For example, the memory 32 stores an alarm time set by the user. The memory 32 also stores sets selected by the user from among the sets stored in the memory 32 described above.

The processor 33 includes one or more central processing units (CPUs) and peripheral circuits therefor. The processor 33 may further include other arithmetic circuits such as a logic arithmetic unit or a numerical arithmetic unit. The processor 33 executes various processes based on computer programs stored in the memory 32. For example, the processor 33 executes control processing for the display 11 and the speaker 12, and outputs control signals to the display 11 and the speaker 12. Thus, the processor 33 controls the image displayed on the display 11 and plays sound.

FIG. 3 is a functional block diagram of the processor 33 of the control part 30. As shown in FIG. 3, the processor 33 includes a clock part 331, a calculation part 332, a determination part 333, a sound playback part 334, a counting part 335, and a setting part 336. Each of these parts of the processor 33 is, for example, a functional module realized by a computer program for performing an operation on the processor 33. Alternatively, each part of the processor 33 may be implemented in the control part 30 as an independent integrated circuit, a microprocessor, or firmware.

The clock part 331 measures time. For example, the clock part 331 measures time by counting a signal output from a circuit that oscillates at a predetermined cycle and adding it to an initial time. The time measured by the clock part 331 basically represents the current time. The clock part 331 may have a function to correct the measured time based on a standard radio wave representing standard time received by, for example, a receiver (not illustrated). The measured time is displayed on the display 11.

The calculation part 332 calculates the magnitude of movement of the object within the detection range of the non-contact sensor 21 based on the detection results by the non-contact sensor 21. The calculation part 332 may calculate the magnitude of movement of the object within a motion detection region (second region) narrower than (or the same region as) the detection range of the non-contact sensor 21. The calculation part 332 receives an output signal from the non-contact sensor 21 and inputs the calculation results to the determination part 333.

The calculation part 332 calculates the magnitude of movement of the object based on, for example, a change in distance to the object within the detection range, a change in the direction in which the object is located, and the speed of the object. In the present embodiment, the non-contact sensor 21 is a millimeter wave sensor. Thus, the calculation part 332 calculates the magnitude of movement of the object based on time-series detection results of the distance from the millimeter wave sensor to the object within the detection range, detected based on the radio wave signal and the reflected signal. Alternatively, the calculation part 332 calculates the magnitude of movement of the object based on time-series detection results of the direction in which the object is located relative to the millimeter wave sensor, detected based on the radio wave signal and the reflected signal. Alternatively, the calculation part 332 calculates the magnitude of movement of the object based on the relative speed of the object relative to the millimeter wave sensor, detected based on the radio wave signal and the reflected signal.

The determination part 333 determines whether a given condition is satisfied based on the detection results by the non-contact sensor 21. The determination part 333 receives an output signal from the non-contact sensor 21 and inputs the determination result to the sound playback part 334.

The determination part 333 determines whether a predetermined motion condition is satisfied based on the detection results by the non-contact sensor 21. The motion condition is a condition that is satisfied when the magnitude of movement of the object in the motion detection region calculated by the calculation part 332 is equal to or greater than a predetermined magnitude. The predetermined magnitude is, for example, the magnitude of movement of the object calculated by the calculation part 332 when the user makes movement of equal to or greater than a predetermined magnitude (for example, sitting up, turning over in bed, moving arms and legs, etc.). The predetermined magnitude is, for example, greater than the magnitude of movement of the object calculated by the calculation part 332 when there is movement of the chest due to the breathing of the user. Thus, the motion condition is not satisfied by movement of the chest due to breathing while the user is resting on the bed.

FIG. 4 is a view schematically showing the detection range of the non-contact sensor 21 when the sound playback device 1 is installed beside a bed B where the user sleeps. In the example shown in FIG. 4, the sound playback device 1 is installed beside the bed B so that the front surface thereof faces the bed B. As shown in FIG. 4, the detection range of the non-contact sensor 21 covers a certain angle range (the region shown in gray in the drawing). The non-contact sensor 21 can perform detection up to a distance from the non-contact sensor 21 that sufficiently exceeds the size of a typical bed B (the region shown in gray in the drawing). Thus, the non-contact sensor 21 can detect movement of an object up to a distance beyond the bed B within this angle range. Note that among the angle ranges in the detection range shown in FIG. 4, in a narrower range within a predetermined angle range, the position of the object can be detected more accurately than in a range wider than the predetermined angle range. Thus, the range in which the position of the object can be detected more accurately may be set as the angle range (detection range) in which detection is performed by the non-contact sensor 21. Furthermore, a region within a predetermined lower limit distance (for example, 15 cm) from the non-contact sensor 21 may be set as an invalid region in which object detection is not performed.

In the present embodiment, the region in which the bed B is located, and specifically, the region in which the sleeping user is located, is preset by the setting part 336. The determination part 333 determines that the motion condition is satisfied when it is determined that there is movement of an object of a predetermined magnitude or greater within the region in which the bed B is located within the detection range (hereinafter referred to as the "motion detection region") based on the detection results of the non-contact sensor 21. As a result, even if there is movement of an object outside the motion detection region, the motion condition is not satisfied, and it cannot be determined that the motion condition is satisfied by movement of the object other than the user on the bed B.

The motion detection region may be any region within the detection range other than the region in which bed B is located. For example, the motion detection region may be a region within the detection range and within a predetermined upper limit distance (for example, 3.5 m) from the sound playback device 1 (i.e., from the non-contact sensor 21), or a region within the detection range and within a sleeping region A, which is described later, etc.

The motion detection region may not include a region within a predetermined lower limit distance (for example, 15 cm) from the sound playback device 1 (i.e., from the non-contact sensor 21). For example, even if the user waves his/her hand slightly, if the position of the hand is close to the non-contact sensor 21, it may be determined that a large user movement has occurred and the motion condition has been satisfied. However, by not including a region within the lower limit distance in the motion detection region, such a possibility can be reduced.

The determination part 333 determines whether a predetermined leaving condition is satisfied based on the detection results by the non-contact sensor 21. The leaving condition is a condition that is satisfied when it is determined that there is movement of an object moving from within a preset sleeping region (first region) A to the outside of the sleeping region A. In the present embodiment, the region where the user sleeps is preset as a predetermined sleeping region (region A in the drawing) by the setting part 336. The sleeping region A is set as a region larger than the actual bed B so that the leaving condition is not determined to be satisfied even if a part of the user (such as a hand or a foot) goes slightly outside the bed B during sleep.

As shown in FIG. 4, the case in which the user moves from inside the bed B to outside the bed B within the detection range of the non-contact sensor 21, and specifically, the cases in which the user moves in the direction indicated by the white arrows in FIG. 4, will be considered. In such cases, the non-contact sensor 21 detects movement of a large object indicating motion by the user within the preset sleeping region A and then detects it outside the sleeping region A. Thus, the determination part 333 determines that the leaving condition is satisfied when the output signal of the non-contact sensor 21 indicates that movement of an object equal to or larger than the above-mentioned predetermined magnitude occurred within the sleeping region A and then outside the sleeping region A.

Conversely, as shown in FIG. 4, the case in which the user moves from within the angle range of the detection range of the non-contact sensor 21 to outside the angle range, and specifically, the user moves in the direction indicated by the hatched arrow in FIG. 4, will be considered. In such a case, the non-contact sensor 21 does not detect the movement of the object outside the sleeping region A. Even if the user moves from within the angle range of the detection range of the non-contact sensor 21 to outside the angle range, when the user is on the bed B, the non-contact sensor 21 may be able to detect small movements, such as movement of the bed caused by the user breathing. Conversely, when the user moves from within the angle range of the detection range of the non-contact sensor 21 to outside the angle range and then moves outside the bed B, even small movements are not detected by the non-contact sensor 21 after the user moves. Thus, in the present embodiment, the determination part 333 determines that the leaving condition is satisfied when the output signal of the non-contact sensor 21 indicates that after movement of an object of a magnitude equal to or greater than the predetermined magnitude has occurred within the sleep region A, no movement of an object of a magnitude equal to or smaller than the predetermined magnitude has occurred within the sleeping region A for a predetermined reference time.

Note that the sleeping region (first region) may include, in addition to region A of FIG. 4, a region within the detection range between region A of FIG. 4 and the sound playback device 1 (i.e., a region between region A of FIG. 4 and the non-contact sensor 21). As a result, the leaving condition can be prevented from being determined to be satisfied when the user extends his/her hand to operate sound playback device 1. Furthermore, the determination part 333 may determine that the user has gone to bed based on movement of an object in a predetermined region within the bed B which is smaller than the bed B.

The sound playback part 334 plays sounds, which are then output from the speaker 12. When a predetermined condition is satisfied, the sound playback part 334 executes action-inducing sound playback processing for playing an action-inducing sound, action sound playback processing for playing an action sound, bed-exit sound playback processing for playing a bed-exit sound, or background sound playback processing for playing a background sound. When a predetermined condition is satisfied, the sound playback part 334 stops the playback of the action-inducing sound, the action sound, the bed-exit sound, or the background sound. Details of sound playback control by the sound playback part 334 will be described later.

The counting part 335 counts the time during which the motion condition is determined by the determination part 333 to be satisfied, as a motion time. In particular, the counting part 335 counts, as the motion time, the time during which the motion condition is determined by the determination part 333 to be satisfied while the action-inducing sound is being played. Thus, the motion time represents the time during which the motion condition is satisfied while the action-inducing sound is being played. Furthermore, even after the motion condition is satisfied and the counting of the motion time has started, the counting part 335 stops counting the motion time while the motion condition is not satisfied.

The setting part 336 performs setting required for the operations of the sound playback device 1, such as sound playback. In the present embodiment, the setting part 336 performs setting of various items based on input by the user via the operation part 20. For example, the setting part 336 performs setting of the alarm time, which is the time when the alarm should be started, the sleeping region A, and the region where the bed B is located. The sleeping region A and the region where the bed B is located are set by the user inputting, for example, the placement position of the sound playback device relative to the bed, the distance between the sound playback device 1 and the bed B, and the size of the bed B, via the operation part 20. The setting part 336 also performs setting of a set selected by the user from among a plurality of sets stored in the memory 32. The setting part 336 performs setting of these items based on, for example, an output signal from the operation part 20 operated by the user. The items set by the setting part 336, such as the alarm time, the sets related to sound, the sleeping region A, and the region in which the bed B is located, set by the user via the setting part 336, are stored in the memory 32.

When the set selected by the user is set by the setting part 336, the sound playback part 334 plays sounds during sound playback processing according to the set that has been set. The sound playback part 334 plays the action-inducing sound associated with the set selected by the user during the execution of the action-inducing sound playback processing, and plays the action sound associated with the set selected by the user during the execution of the action sound playback processing. The sound playback part 334 plays the bed-exit sound associated with the set selected by the user during the execution of the bed-exit sound playback processing, and plays the background sound associated with the set selected by the user during the execution of the background sound playback processing. Thus, the sound playback part 334 plays sounds based on the selection by the user from among a plurality of different sounds. As a result, sounds can be played in accordance with the preference of the user.

The setting part 336 may also set sounds selected by the user from among a plurality of different sounds stored in the memory 32, instead of setting a set related to sounds. In this case, for example, the setting part 336 sets one action-inducing sound selected by the user from among a plurality of action-inducing sounds as the action-inducing sound to be played during action-inducing sound playback processing. Likewise, the setting part 336 sets one action sound, bed-exit sound, and background sound selected by the user from among a plurality of action sounds, a plurality of bed-exit sounds, and a plurality of background sounds as the action sound to be played during action sound playback processing, the bed-exit sound to be played during bed-exit sound playback processing, and the background sound to be played during background sound playback processing, respectively. As a result, the sound playback part 334 plays the action-inducing sound selected by the user during the execution of the action-inducing sound playback processing, and plays the action sound selected by the user during the execution of the action sound playback processing. The sound playback part 334 plays the bed-exit sound selected by the user during the execution of the bed-exit sound playback processing, and plays the background sound selected by the user during the execution of the background sound playback processing. Since sounds based on the selection by the user are played in this manner, the sounds are played in accordance with the preference of the user.

Note that the setting by the setting part 336 need not necessarily be performed based on an output signal from the operation part 20. For example, when the sound playback device 1 is set to the bed region detection mode, the setting part 336 may set a region in which the movement of an object is detected by the non-contact sensor 21 (for example, a region in which movement is detected by the user intentionally turning around on the bed) as the sleeping region A and the region in which the bed B is located.

### Sound Playback Control

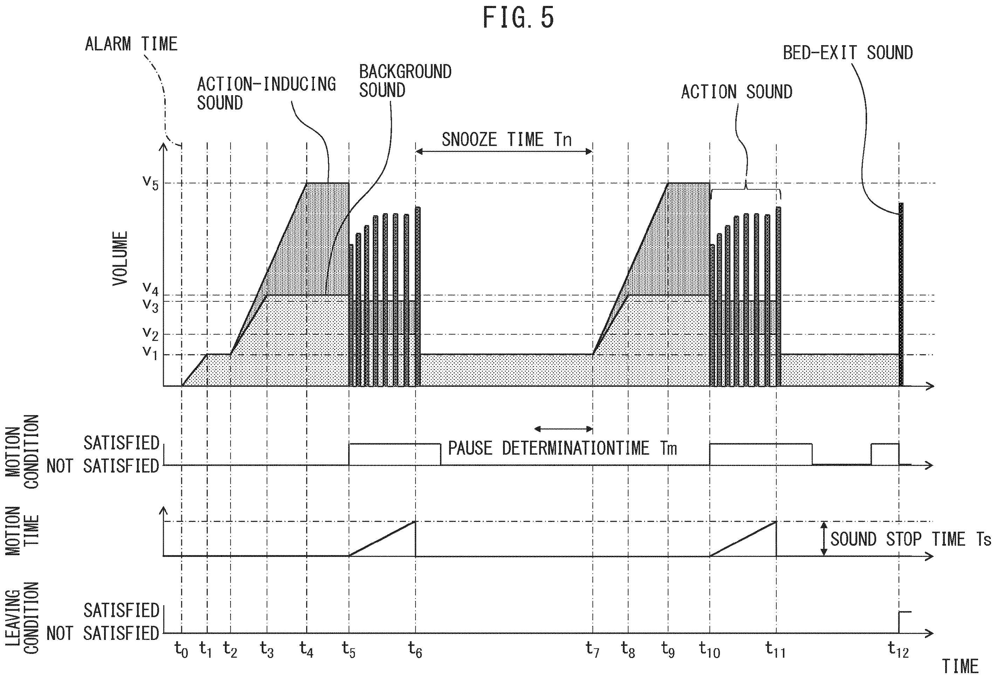

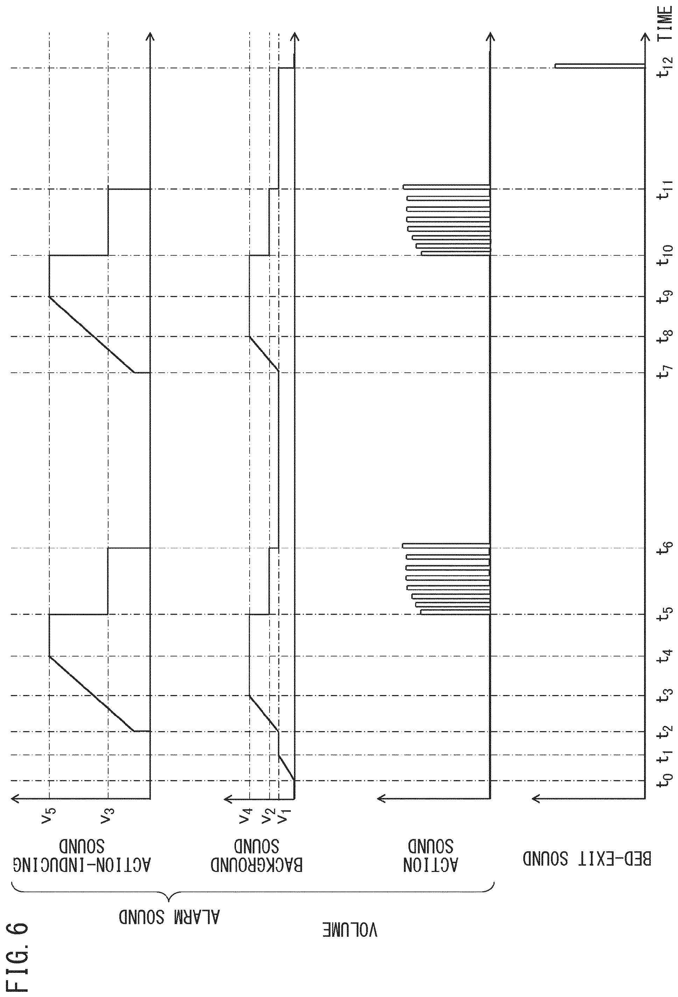

Next, the sound playback control of the sound playback device 1 configured in this manner will be described with reference to FIGS. 5 to 8. FIG. 5 is a time chart showing the overall volume of sound output by the sound playback device 1, the satisfaction of the motion condition, the motion time, and the satisfaction of the leaving condition. FIG. 6 is a time chart showing the volume of each sound of FIG. 5. The horizontal axes in FIGS. 5 and 6 represents the time measured by the clock part 331 (hereinafter also referred to as "measured time").

In the example shown in FIGS. 5 and 6, the alarm time is set to time t₀. Thus, until time t₀, the sound playback part 334 stops the playback of all sounds, including the action-inducing sound, the action sound, the bed-exit sound, and the background sound.

In the present embodiment, the sound playback part 334 starts background sound playback processing when the measured time reaches a time determined in accordance with the alarm time. In addition, the sound playback part 334 starts the action-inducing sound playback processing when the measured time reaches the time determined in accordance with the alarm time. The time determined in accordance with the alarm time may be the alarm time, may be a time a predetermined time before the alarm time, or may be a time a predetermined time after the alarm time. As a result, the user can be informed that the measured time has reached the alarm time. Note that the background sound playback processing and the action-inducing sound playback processing may be started at the same time or at different times.

In the example shown in FIGS. 5 and 6, at time t₀, which is the alarm time, the sound playback part 334 starts background sound playback processing to play the background sound, and then gradually increases the volume thereof. In the present embodiment, when the measured time reaches time t₁, which is a certain time after time t₀, the sound playback part 334 temporarily stops increasing the volume of the background sound until time t₂. The period from time t₀ to time t₂ is an intro period, in which the volume of sound by the sound playback device 1 is maintained as a low level to a first volume v₁. As a result, a sleeping user can be prevented from being surprised by a sudden output of a high volume sound. Note that the intro period is not necessarily required.

When the intro time is completed at time t₂, the sound playback part 334 then starts the action-inducing sound playback processing for playing the action-inducing sound, and gradually increases the volume of the action-inducing sound. Thus, in the present embodiment, the playback of the action-inducing sound starts after a predetermined intro period has elapsed from the alarm time. Specifically, the playback processing for playing the action-inducing sound is executed when the measured time reaches a time determined in accordance with the alarm time. Since the intro period is not necessarily required as described above, the action-inducing sound playback processing may be started at time t₀, which is the alarm time. The sound playback part 334 also increases the volume of the background sound after time t₂. In the present embodiment, the volume of the action-inducing sound is greater than the volume of the background sound.

In the present embodiment, when the measured time reaches time t₃ after a certain time has elapsed since time t₂, the sound playback part 334 maintains the volume of the background sound at a constant fourth volume v₄. After that, when the measured time reaches time t₄ after a certain time has elapsed since time t₂, the sound playback part 334 maintains the volume of the action-inducing sound at a constant fifth volume v₅. In the present embodiment, the fifth volume v5 is a volume greater than the fourth volume v₄. In the present embodiment, the timing (time t₃) when the background sound reaches the fourth volume v₄ and the timing (time t₄) when the action-inducing sound reaches the fifth volume v₅ are different, but they may be the same timing.

During the execution of the action-inducing sound playback processing or the background sound playback processing, some image may be displayed on the display 11. For example, when the action-inducing sound is the footsteps of a certain character, an image of the character walking or running may be displayed on the display 11 during the playback of the action-inducing sound.

When the action-inducing sound is played and the user makes movement on the bed B, the determination part 333 determines that the motion condition is satisfied by the movement. In the present embodiment, when the determination part 333 determines that the motion condition is satisfied during playback of the action-inducing sound, the sound playback part 334 starts the action sound playback processing for playing the action sound. Thus, in the example shown in FIGS. 5 and 6, the action sound playback processing starts at time t₅. The volume of the action sound is less than the fifth volume v₅. Since the action sound is played when the determination part 333 determines that the motion condition is satisfied in this manner, the user can be encouraged to move his/her body. As a result, the user can be encouraged to wake up while asleep. Since the volume of the action sound is less than the fifth volume v₅, the user moves his/her body to reduce the volume of the sound output by the sound playback device 1, whereby the user can be encouraged to wake up.

During the execution of the action sound playback processing, images may be displayed in association with the playback of the action sound on the display 11. For example, if the action sound is a sound effect for obtaining an item, an image of the item may be displayed on the display 11.

In the present embodiment, at the same time that the action sound playback processing is executed, the sound playback part 334 lowers the volumes of the action-inducing sound and the background sound to a third volume v₃ and a second volume v₂, respectively. In the present embodiment, the third volume v₃ is less than the fourth volume v₄, but may be greater than the fourth volume v₄ as long as it is less than the fifth volume v₅. Furthermore, in the present embodiment, the second volume v₂ is less than the third volume v₃ and greater than the first volume v₁. By lowering the volumes of the action-inducing sound and the background sound in this manner, the user can easily hear the action sound. Note that during execution of the action sound playback processing, the volume of at least one of the action-inducing sound and the background sound may be set to zero.

The action sound playback processing is executed while the determination part 333 determines that the motion condition is satisfied during the execution of the action-inducing sound playback processing or the background sound playback processing. In particular, in the present embodiment, the action sound playback processing is executed while the motion time counted by the counting part 335 is not zero. In the example shown in FIGS. 5 and 6, the user moves significantly on the bed B after time t₅, and thus, the motion time continues to be counted by the counting part 335 after time t₅. Therefore, in the example shown in FIGS. 5 and 6, the sound playback part 334 continuously executes the action sound playback processing after time t₅.

Furthermore, as shown in FIGS. 5 and 6, during the execution of the action sound playback processing, the counting part 335 counts the time during which it is determined by the determination part 333 that the motion condition is satisfied as the motion time. In the present embodiment, when the motion time counted by the counting part 335 reaches a predetermined sound stop time Ts (first time, for example, 1 second or longer, 2 seconds or longer, or 2.5 seconds or longer, and 10 seconds or shorter, 5 seconds or shorter, or 3 seconds or shorter) (time t₆), the sound playback part 334 stops the action sound playback processing. Specifically, when the total time determined by the determination part 333 that the motion condition is satisfied reaches the sound stop time Ts, the sound playback part 334 stops the action sound playback processing.

In the present embodiment, when a stop condition is satisfied by the motion time counted by the counting part 335 reaching the sound stop time Ts, the sound playback part 334 stops the action-inducing sound playback processing, and thus, stops the playback of the action-inducing sound. Specifically, the action-inducing sound is stopped by the user performing an action for a certain period of time during the playback of the action-inducing sound. Thus, when the action-inducing sound is played, the user moves his/her body to stop the playback of the action-inducing sound, whereby the user can be encouraged to wake up. When the action-inducing sound is stopped, the action-inducing sound playback processing is not executed for a snooze time Tn, which will be described later. Furthermore, in the present embodiment, when the motion time counted by the counting part 335 reaches the sound stop time Ts, the sound playback part 334 lowers the volume of the background sound to the first volume. Thus, since the volume of the background sound is lowered as a result of the user moving his/her body, the user becomes more proactive in moving his/her body, whereby the user can be encouraged to wake up. Note that the volume of the background sound may be reduced to a volume different from the first volume, or may not be reduced, when the motion time counted by the counting part 335 reaches the sound stop time Ts.

Note that in the present embodiment, the sound playback part 334 stops the action-inducing sound playback processing and the action sound playback processing when the motion time counted by the counting part 335 reaches the sound stop time Ts. However, the sound playback part 334 may stop the action-inducing sound playback processing and the action sound playback processing when an action duration value calculated by dividing the motion time (action duration) counted by the counting part 335 by the maximum action duration corresponding to the sound stop time Ts described above reaches 100%. In other words, the sound playback part 334 stops the action-inducing sound playback processing and the action sound playback processing when a stop condition indicating that the motion time counted by the counting part 335 has reached a predetermined sound stop time Ts is satisfied.

The sound playback part 334 may stop only the action-inducing sound playback processing when the stop condition is satisfied, and may continue the action sound playback processing as long as the determination part 333 determines that the motion condition is satisfied. Alternatively, the sound playback part 334 may stop only the action sound playback processing without stopping the action-inducing sound playback processing when the stop condition is satisfied. In this case, the volume of the action-inducing sound may be reduced when the stop condition is satisfied.

In the present embodiment, as shown in FIGS. 5 and 6, the action sound is intermittently played during the execution of the action sound playback processing. Thus, the action sound is played multiple times during the execution of the action sound playback processing. In other words, in the present embodiment, during the execution of the action sound playback processing, the action sound is played multiple times intermittently from the start of the action sound playback processing until the action-inducing sound playback processing is stopped by satisfaction of the stop condition. In the example shown in FIGS. 5 and 6, the action sound is played eight times during the execution of the action sound playback processing.

In the present embodiment, the sound playback part 334 plays the action sound such that the time during which the motion condition is determined by the determination part 333 to be satisfied between one action sound and the next action sound during the execution of the action sound playback processing (hereinafter referred to as the "action determination time between sounds") changes in accordance with the number of times the action sound has already been played in one action sound playback processing. For example, the sound playback part 334 plays the action sound such that the action determination time between sounds becomes longer as the number of times the action sound has already been played increases. The sound playback part 334 may play the action sound such that the action determination time between sounds becomes longer as the motion time counted by the counting part 335 becomes longer. Thus, for example, the action determination time between the first action sound playback and the second action sound playback after the start of the action sound playback processing is shorter than the action determination time between the second action sound playback and the third action sound playback. When the action determination time between sounds is long from the beginning of the action sound playback processing, the user will not feel like moving his/her body because the action sound is less likely to be played, but since the action determination time between sounds is short at the beginning of the action sound playback processing in the present embodiment, the user does not lose the desire to move his/her body. Since a user who has been moving his/her body for a certain period of time moves his/her body with the goal of hearing the next action sound, the action determination time becomes longer as time passes from the start of the action sound playback processing, which can further encourage the user to wake up.

In the present embodiment, the plurality of action sounds played during the execution of the action sound playback processing are at least partially different sounds. For example, the action sounds are at least partially different sound effects. Thus, the memory 32 stores a plurality of different tracks played as action sounds corresponding to one set, and the plurality of different tracks are played during the execution of the action sound playback processing. The different sounds are, for example, different sound effects (for example, from an arbitrary game, a sound effect played when a character jumps, a sound effect played when a character operates an item, a sound effect played when a character obtains an item, etc.). The different sounds may be the same sound effect but have different pitches or tempos.

In the present embodiment, the different action sounds played during the execution of the action sound playback processing are changed based on the motion time counted by the counting part 335. Thus, for example, action sounds during a relatively short motion time (from the first action sound to the fourth action sound) are set as the sound effect played when a character jumps in an arbitrary game, and action sounds during a relatively long motion time (from the fifth action sound to the eighth action sound) is set as the sound effect played when a character acquires an item in an arbitrary game. As a result, the user can know the motion time counted by the counting part 335, and intuitively understand the time during which the action should be continued until the action-inducing sound or the like is stopped. The action sound to be played may be predetermined in accordance with the order in which the action sounds are played.

The action sound played when the motion time reaches the sound stop time Ts (the last action sound played during the execution of the action sound playback processing) may be a sound effect different from other action sounds, such as a sound effect played when an enemy is defeated in an arbitrary game. As a result, the user can recognize that the motion time has reached the sound stop time Ts and the action-inducing sound playback processing and the action sound playback processing will end.

The different action sounds played during the action sound playback processing may be changed based on the remaining time until the time satisfying the motion condition reaches the sound stop time Ts. Alternatively, the different action sounds played during the action sound playback processing may all be the same sound.

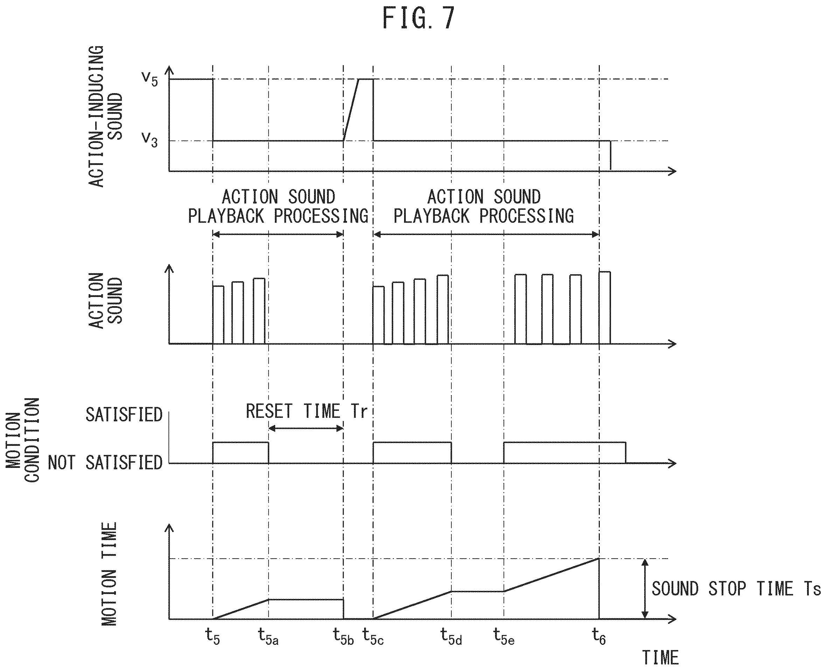

Next, control of the playback of the action sound when there is a period during which the user does not move significantly on the bed B while the action sound playback processing is being executed will be described with reference to FIG. 7. FIG. 7 is a time chart showing the volume of the action-inducing sound and the action sound, the motion condition, and the motion time counted by the counting part 335 while the action sound playback processing is being executed.

As shown in FIG. 7, when the determination part 333 determines that the motion condition is satisfied at time t₅, the counting part 335 starts counting the motion time. In the example shown in FIG. 7, the user moves significantly on the bed B from time t₅ to time t₅ₐ, and thus, it is determined that the motion condition is satisfied from time t₅ to time t₅ₐ. Thus, the sound playback part 334 executes the action sound playback processing from time t₅ to time t₅ₐ, and plays the action sound intermittently during this period.

In the example shown in FIG. 7, the user stops movement after time t₅ₐ, and as a result, the determination part 333 determines that the motion condition is not satisfied after time t₅ₐ. Since the counting part 335 counts the time during which the determination part 333 determines that the motion condition is satisfied as the motion time, the motion time counted by the counting part 335 does not increase after time t₅ₐ and remains constant. Since the motion time counted by the counting part 335 does not become zero after time t₅ₐ, the action sound playback processing continues.

In the present embodiment, the counting part 335 resets the motion time to zero when a non-motion time, which is the time continuously determined by the determination part 333 as not satisfying the motion condition after the counting part 335 starts counting the motion time, reaches a predetermined reset time (fourth time) Tr. The reset time Tr is a time shorter than the sound stop time Ts, and is, for example, 0.5 seconds or longer, 0.7 seconds or longer, or 0.9 seconds or longer, and 5 seconds or shorter, 3 seconds or shorter, or 2 seconds or shorter. As a result, the user will take an action continuously so that the motion time counted by the counting part 335 does not return to zero due to the user not taking an action over the reset time, whereby the user can be encouraged to take an action.

In the example shown in FIG. 7, after time t₅ₐ, the determination part 333 determines that the motion condition is not satisfied for a time period equal to or longer than the reset time Tr. Thus, at time t_{5b}, which is the time after the reset time Tr has elapsed from time t₅ₐ, when the determination part 333 starts to determine that the motion condition is not satisfied, the motion time counted by the counting part 335 is reset to zero. Alternatively, the counting process in the counting part 335 may be ended at time t_{5b}. Thus, the action sound playback processing is stopped at time t_{5b}.

In the present embodiment, when the motion time counted by the counting part 335 is reset to zero, the volume of the action-inducing sound is increased from the third volume v₃ to the fifth volume v₅. At this time, the volume of the background sound is increased from the second volume v₂ to the fourth volume v₄. Specifically, when the motion time counted by the counting part 335 is reset to zero, the state is returned to the state before the action sound playback process is started. Note that when the motion time counted by the counting part 335 is reset to zero, the volume of the action-inducing sound and the volume of the background sound need not be increased. In this case, when a predetermined time longer than the reset time has elapsed since the time determined by the determination part 333 that the motion condition is not satisfied, or when a predetermined time has elapsed since the motion time counted by the counting part 335 was reset to zero, the volume of the action-inducing sound and the volume of the background sound are increased.

In the present embodiment, when the time during which it is determined that the motion condition is not satisfied after the start of counting the motion time reaches the reset time Tr, the motion time counted by the counting part 335 is reset to zero. However, if the motion time counted by the counting part 335 is changed based on the time during which it is determined that the motion condition is not satisfied after the start of counting the motion time, the time need not necessarily be reset to zero. For example, the motion time counted by the counting part 335 is reduced as the time during which it is determined that the motion condition is not satisfied becomes longer. As a result, the user can be encouraged to take action because the time required to stop the action-inducing sound becomes longer when the user stops the action. Alternatively, even when it is determined that there is a time during which the motion condition is not satisfied after the start of counting the motion time, the counted motion time may not be changed.

The sound stop time Ts may be changed based on the time during which it is determined that the motion condition is not satisfied after the start of counting the motion time, instead of the motion time counted by the counting part 335. In this case, for example, the sound stop time Ts is lengthened as the time during which it is determined that the motion condition is not satisfied after the start of counting the motion time becomes longer. As a result, the user can be encouraged to take action, since when the user stops the action, the time required to stop the action-inducing sound becomes longer.

In the example shown in FIG. 7, after the determination part 333 determines that the motion condition is not satisfied from time t₅ₐ to time t_{5c}, the user starts an action again at time t_{5c}, and the determination part 333 determines that the motion condition is satisfied. As a result, at time t_{5c}, the action sound playback processing is restarted, the volume of the action-inducing sound and the background sound are reduced, and the counting part 335 starts counting the motion time.

In the example shown in FIG. 7, the user stops moving between time t5d and time t_{5c}, and the determination part 333 again determines that the motion condition is not satisfied. However, the time interval between time t5d and time t₅ₑ is shorter than the reset time Tr, and as a result, the motion time counted by the counting part 335 is not reset to zero. In the example shown in FIG. 7, the user continues to perform an action after time t_{5c}, and as a result, the motion time counted by the counting part 335 increases, and ultimately, the motion time reaches the sound stop time Ts at time t₆. When the motion time reaches the sound stop time Ts in this manner, the stop condition is satisfied, and the sound playback part 334 stops the action-inducing sound playback processing and the action sound playback processing, in the same manner as the example shown in FIGS. 5 and 6.

Referring again to FIGS. 5 and 6, since the action-inducing sound playback processing and the action sound playback processing are stopped at time t₆, the background sound is played at a relatively small first volume v₁ from time t₆ onward. In the example shown in FIGS. 5 and 6, the user stops performing an action after time t₆, and thus, the determination part 333 determines that the motion condition is not satisfied thereafter.

In the present embodiment, the sound playback part 334 resumes the action-inducing sound playback processing when a resumption condition is satisfied after the action-inducing sound playback processing is stopped due to the stop condition being satisfied. In the present embodiment, the resumption condition is a condition that is satisfied when the snooze time (second time) Tn has elapsed since the action-inducing sound playback processing was stopped and the non-motion time during which it is determined by the determination part 333 that the motion condition is not satisfied reaches the pause determination time (third time) Tm. The snooze time Tn is, for example, 3 minutes or less. It may be longer or shorter than 3 minutes. The pause determination time Tm is shorter than the snooze time, and is, for example, 30 seconds. It may be longer or shorter than 30 seconds.

In the example shown in FIGS. 5 and 6, at time t₇, the snooze time Tn has elapsed since time t6, and the determination part 333 has continuously determined that the motion condition is not satisfied for the pause determination time Tm immediately before time t₇. Thus, in the example shown in FIGS. 5 and 6, the action-inducing sound playback processing is resumed at time t₇.

Thus, in the present embodiment, when the user is on bed B after performing an action and stops the action, the action-inducing sound is played again. If the user is on bed B and stops the action, the playback of the action-inducing sound is repeated.

The resumption condition may be a condition that is satisfied when only one of the snooze time Tn having elapsed after the action-inducing sound playback processing is stopped due to the stop condition being satisfied, and the non-motion time during which it is determined by the determination part 333 that the motion condition is not satisfied reaching the pause determination time Tm is satisfied. For example, if 10 minutes have elapsed since the action-inducing sound playback processing was stopped, the action-inducing sound playback processing is resumed regardless of whether the motion condition is satisfied or not.

Thereafter, in the present embodiment, from time t₇ to time t₁₁, the same actions as those from time t₂ to time t₆ are repeated. In the present embodiment, until the determination part 333 determines that the leaving condition described above is satisfied, the same operations as those from time t₂ to time t₆ are repeated.

When the determination part 333 determines that the leaving condition is satisfied, the sound playback part 334 stops the action-inducing sound playback processing, the action sound playback processing, or the background sound playback processing if these processes are being executed. When the determination part 333 determines that the leaving condition is satisfied, the sound playback part 334 does not resume the action-inducing sound playback processing even if the resumption condition is satisfied thereafter. Thus, when the determination part 333 determines that the leaving condition is satisfied, the sound playback part 334 does not execute the action-inducing sound playback processing, the action sound playback processing, or the background sound playback processing until the time measured by the clock part 331 reaches the time determined in accordance with the alarm time. In this manner, the sound playback can be completely stopped based on the user getting out of bed. In particular, since background sound playback processing is stopped when the determination part 333 determines that the leaving condition is satisfied in the present embodiment, the user can be encouraged to get out of bed.

Furthermore, when the determination part 333 determines that the leaving condition is satisfied, the sound playback part 334 executes bed-exit sound playback processing for playing a bed-exit sound different from the action-inducing sound, the action sound, and the background sound. The bed-exit sound playback processing is executed only when it is determined that the leaving condition is satisfied. Thus, the bed-exit sound playback processing is not executed when the leaving condition is not satisfied, for example, even when the stop condition is satisfied or the resumption condition is satisfied. By playing the bed-exit sound only when the leaving condition is satisfied, the user can recognize that the action-inducing sound playback process and the like have been stopped and will not be executed in the future.

Furthermore, the counting part 335 resets the motion time to zero when it is determined by the determination part 333 that the leaving condition is satisfied. Alternatively, when it is determined that the leaving condition is satisfied, the counting process in the counting part 335 may be ended.

In the example shown in FIGS. 5 and 6, at time t₁₂, the determination part 333 determines that the leaving condition is satisfied. Thus, at time t₁₂, the bed-exit sound playback processing is executed and the bed-exit sound is played. In addition, at time t₁₂, the background sound playback processing is stopped, and thus, the playback of the background sound is stopped.

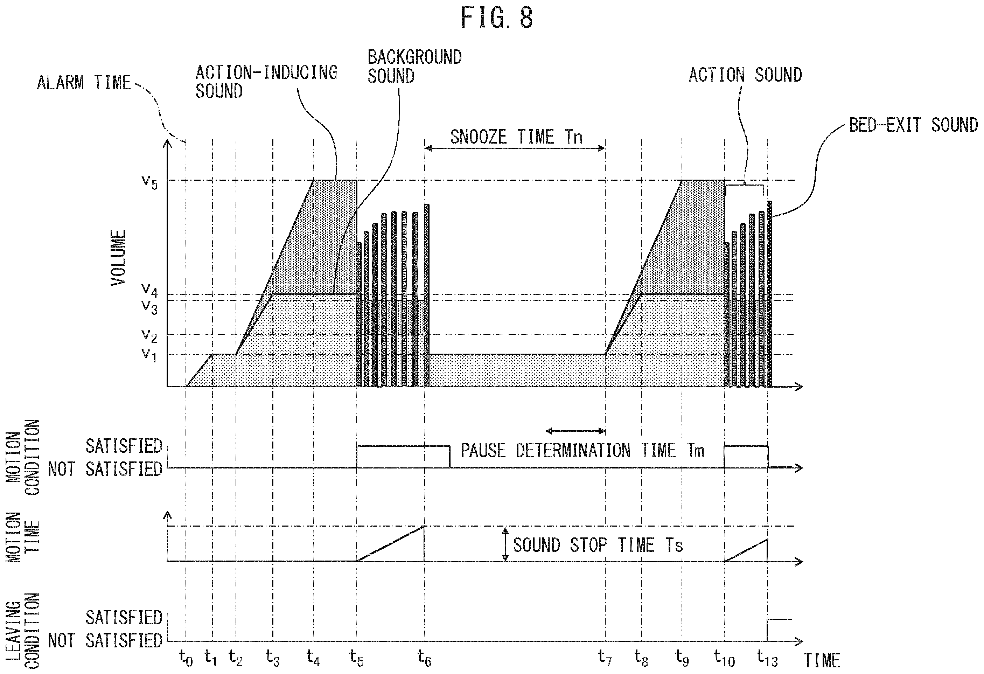

FIG. 8 is a time chart similar to FIG. 5, showing the overall volume of sound played by the sound playback device 1. In the example shown in FIG. 8, after the action sound playback processing is started at time t₁₀, the determination part 333 determines that the leaving condition is satisfied before the motion time counted by the counting part 335 reaches the sound stop time Ts.

As shown in FIG. 8, when the determination part 333 determines that the leaving condition is satisfied during the execution of the action-inducing sound playback processing, the action sound playback processing, and the background sound playback processing (time t₁₃), the sound playback part 334 stops these processes. Thus, the playback of the action-inducing sound, the action sound, and the background sound are stopped at time t₁₃. In addition, the sound playback part 334 executes the bed-exit sound playback processing at time t₁₃, thereby playing the bed-exit sound. In the present embodiment, the motion time counted by the counting part 335 is reset to zero at time t₁₃.

### Control Flow

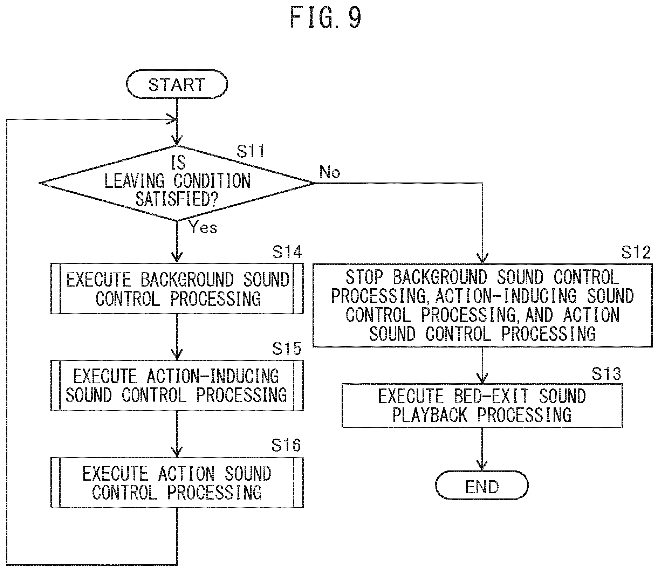

Next, the flow of control will be described with reference to FIGS. 9 to 11. FIG. 9 is a flowchart showing the flow of playback processing for playing various sounds from the speaker 12. The playback processing shown in the drawing is executed by the processor 33 of the control part 30 when the alarm time is set by the setting part 336.

As shown in FIG. 9, when playback processing is started, first, the sound playback part 334 determines whether the determination part 333 has determined that the leaving condition is satisfied (step S11). When it is determined in step S11 that the leaving condition is satisfied, the sound playback part 334 stops background sound control processing for controlling the background sound playback processing, the action-inducing sound control processing for controlling the action-inducing sound playback processing, and the action sound control processing for controlling the action sound playback processing (step S12). Thus, when the background sound playback processing, action-inducing sound playback processing, or action sound playback processing is being executed, these playback processes are stopped. Since the sound playback part 334 executes bed-exit sound playback processing, thereby the bed-exit sound is played (step S13), and playback processing is ended.

When it is determined in step S11 that the leaving condition is not satisfied, the sound playback part 334 executes background sound control processing (step S14). During the execution of background sound control processing, when the time measured by the clock part 331 reaches the set alarm time, the sound playback part 334 starts the background sound playback processing and plays the background sound. During the execution of background sound control processing, when the playback of the background sound starts, the sound playback part 334 gradually increases the volume of the background sound from the first volume v₁ to the fourth volume v₄ in steps. Furthermore, when the motion time counted by the counting part 335 increases from zero, the sound playback part 334 decreases the volume of the background sound to the second volume v₂, and when the motion time becomes zero, increases the volume to the fourth volume v₄. Furthermore, when the stop condition is satisfied, and specifically, when the motion time reaches the sound stop time Ts, the sound playback part 334 decreases the volume of the background sound to the first volume v₁. The sound playback part 334 increases the volume of the background sound again to the fourth volume v₄ when the resumption condition is satisfied after the stop condition is satisfied.

Next, the sound playback part 334 executes the action-inducing sound control processing (step S15). During the execution of the action-inducing sound control processing, when the time measured by the clock part 331 reaches the time when the intro period has elapsed from the set alarm time, the sound playback part 334 starts the action-inducing sound playback processing and plays the action-inducing sound. During the execution of the action-inducing sound control processing, when the playback of the action-inducing sound starts, the sound playback part 334 increases the volume of the sound to the fifth volume v₅. When the motion time counted by the counting part 335 increases from zero, the sound playback part 334 decreases the volume to the third volume v₃, and when the motion time becomes zero, increases the volume to the fifth volume v₅. Furthermore, when the stop condition is satisfied, and specifically, when the motion time reaches the sound stop time Ts, the sound playback part 334 stops the action-inducing sound playback processing. The sound playback part 334 restarts the action-inducing sound playback processing and increases the volume again to the fifth volume v₅ when the resumption condition is satisfied after the stop condition is satisfied.

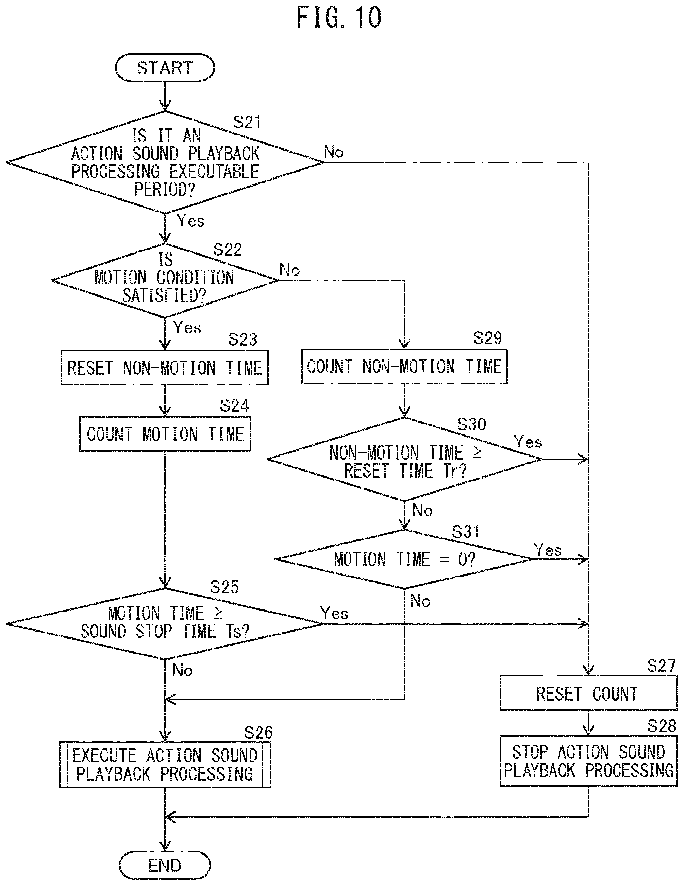

Next, the sound playback part 334 executes the action sound control processing (step S16). The action sound control processing will be described with reference to FIG. 10. FIG. 10 is a flowchart showing the flow of the action sound control processing. The illustrated action sound control processing is executed while step S16 is repeatedly passed through in the playback processing of FIG. 9 and until the action sound control processing is stopped in step S12.

As shown in FIG. 10, when the action sound control processing starts, the sound playback part 334 first determines whether or not the current timing is in an executable period of the action sound playback processing (step S21). In the present embodiment, since the action sound playback processing is executed during playback of the action-inducing sound, it is determined that the current timing is in an executable period of the action sound playback processing when the action-inducing sound playback processing is being executed.

When it is determined in step S21 that the current timing is in an executable period of the action sound playback processing, the sound playback part 334 determines whether the determination part 333 has determined that the motion condition is satisfied (step S22). When it is determined in step S22 that the motion condition is satisfied, if the non-motion time is being counted by the counting part 335 in step S27, which is described later, the counting part 335 resets the non-motion time to zero (step S23). Next, the counting part 335 increases the counted motion time (step S24). Next, the sound playback part 334 determines whether the motion time counted in step S24 is equal to or greater than a predetermined sound stop time Ts (step S25). When it is determined in step S25 that the motion time is less than the sound stop time Ts, the action sound playback processing is executed. The action sound playback processing will be described later.

Conversely, when it is determined in step S25 that the motion time is equal to or greater than the sound stop time Ts, both the motion time and the non-motion time counted by the counting part 335 are reset to zero (step S27). Next, if the action sound playback processing is being executed, the sound playback part 334 stops the action sound playback processing (step S28). When it is determined in step S21 that the current timing is not in an executable period of the action sound playback processing, for example, if the action-inducing sound playback processing is not being executed, both the motion time and the non-motion time are reset to zero (step S27), and the action sound playback processing is stopped (step S28).

When it is determined in step S22 that the motion condition is not satisfied, the counting part 335 increments the counted non-motion time (step S29). The sound playback part 334 then determines whether the non-motion time counted in step S29 is equal to or greater than the predetermined reset time Tr (step S30). When it is determined in step S30 that the non-motion time is less than the reset time Tr, the sound playback part 334 determines whether the motion time counted by the counting part 335 is zero (step S31).

When it is determined in step S31 that the motion time is not zero, and specifically, if the action sound playback processing has been executed once since it was determined that the current timing is in an executable period of the action sound playback processing, the action sound playback processing is executed (step S26, which corresponds to times t₅ₐ to t_{5b} and t_{5d} to t₅ₑ of FIG. 7). Conversely, when it is determined in step S31 that the motion time is zero, and specifically, if the action sound playback processing has not been executed even once since it was determined that the current timing is in an executable period of the action sound playback processing, both the motion time and the non-motion time are reset to zero (step S27), and the action sound playback processing is stopped (step S28).

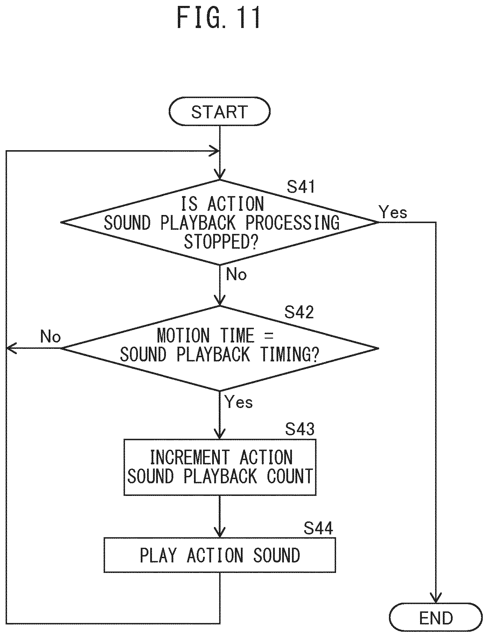

Next, the action sound playback processing will be described with reference to FIG. 11. FIG. 11 is a flowchart showing the flow of the action sound playback processing. The action sound playback processing shown in the drawing is executed while step S26 in the action sound control processing of FIG. 10 is repeatedly passed through.

As shown in FIG. 11, when the action sound playback processing is started, first, the sound playback part 334 determines whether or not a stop of the action sound playback processing has been requested (step S41). When the action sound playback processing is stopped in step S28 of the action sound control processing, the sound playback part 334 determines that a stop of the action sound playback processing has been requested. When it is determined in step S41 that a stop of the action sound playback processing has been requested, the action sound playback processing is ended.

Conversely, when it is determined in step S41 that a stop of the action sound playback processing has not been requested, the sound playback part 334 determines whether the motion time counted in step S24 of the action sound control processing is a predetermined sound playback timing (step S42). The sound playback timing represents the timing of playing of each of the action sounds that are played multiple times during the action sound playback processing. In the present embodiment, the time intervals between the playback timings of two consecutively played action sounds (i.e., the action determination time between sounds) are different from each other. In particular, in the present embodiment, as described above, the time interval between the playback timings of two consecutively played action sounds becomes longer as the number of times that the action sound has already been played increases.

When it is determined in step S42 that the motion time is not the sound playback timing, step S41 is executed repeatedly. Conversely, when it is determined in step S42 that the motion time is the sound playback timing, the counting part 335 increments the count of the number of times the action sound has been played by one (step S43). Next, the sound playback part 334 plays the action sound in accordance with the number of times the action sound has been played counted in step S43 (step S44), and then step S41 is executed repeatedly.

### Modifications

In the above embodiment, when the determination part 333 determines that the leaving condition is satisfied, the sound playback is completely stopped. However, the sound playback may be completely stopped due to a factor other than the leaving condition being satisfied. For example, the sound playback may be completely stopped when the operation part 20 is pressed by the user or when a certain time (for example, one hour) has elapsed since the measured time reached the time determined by the alarm time.

In the above embodiment, the sound playback part 334 plays the action-inducing sound overlapped with the background sound. However, the sound playback part 334 may stop playing the background sound when playing the action-inducing sound. In this case, the sound playback part 334 stops the background sound playback processing when executing the action-inducing sound playback processing. The sound playback part 334 then resumes the background sound playback processing when the action-inducing sound playback processing is stopped, except when it is determined that the leaving condition is satisfied. Thus, in the example shown in FIGS. 5 and 6, playing the background sound may be stopped during times t₂ to t₆ and during times t₇ to t₁₁.

Additionally, in the above embodiment, the sound playback part 334 plays the action sound over the action-inducing sound and the background sound. However, in a modification, the sound playback part 334 may stop playing the action-inducing sound and the background sound while playing the action sound. In this case, both the action sound and the action-inducing sound may be music, and the action sound may be music that is related to but different from the music of the action-inducing sound, as described above.

Specifically, in the present modification, the sound playback part 334 stops the action-inducing sound playback processing and the background sound playback processing when executing the action sound playback processing. When the sound playback part 334 stops the action sound playback processing for a reason other than the stop condition being satisfied, it resumes the action-inducing sound playback processing and the background sound playback processing. Alternatively, the sound playback part 334 may stop the action-inducing sound playback processing and the background sound playback processing when playing the action sound (i.e., when playing each of the action sounds that is played multiple times during the action sound playback processing). The sound playback part 334 may then resume the action-inducing sound playback processing and the background sound playback processing when stopping the playback of the action sound for a reason other than the stop condition being satisfied.

Either one of the action-inducing sound playback processing and the background sound playback processing may not be executed. Thus, in this case, when the measured time reaches the time determined in accordance with the alarm time, only one of the action-inducing sound playback processing and the background sound playback processing will be executed.

In the above embodiment, when the determination part 333 determines that the motion condition is satisfied and the action sound playback processing is stopped, the action sound playback processing is not executed for the snooze time Tn. However, in a modification, the action sound playback processing may be executed before the snooze time Tn has elapsed. Specifically, the action sound playback processing may be executed when the action-inducing sound playback processing is not executed.

When the sound playback part 334 executes the action sound playback processing when the action-inducing sound playback processing is not being executed, the sound playback part 334 may play an action sound different from that when the action-inducing sound playback processing is being executed. In this case, the sound stop time Ts may be different from that when the action-inducing sound playback processing is being executed. In particular, in this case, the sound stop time Ts may be longer than that when the action-inducing sound playback processing is being executed. Alternatively, in this case, even there may be no sound stop time Ts, and even if the determination part 333 determines that the motion condition is continuously satisfied, the action sound playback processing may continue to be executed without being stopped.

Furthermore, in the above embodiment, the different action sounds played during the execution of the action sound playback processing are changed based on the motion time counted by the counting part 335. However, in a modification, the action sound played during the execution of the action sound playback processing may be changed in accordance with the magnitude of movement of the object detected by the non-contact sensor 21. For example, the action sound may be made longer, the volume may be increased, or the number of repetitions of the repeated sound may be increased as the magnitude of the movement of the object detected by the non-contact sensor 21 increases. For example, the action sound may be a sound effect of coin acquisition in an arbitrary game, and the number of times the sound effect of coin acquisition is repeated during one playback of the action sound increases (the number of coins acquired increases) as the movement of the object detected by the non-contact sensor 21 increases.

In the above embodiment, whether or not the stop condition for stopping the action-inducing sound playback processing and the action sound playback processing is satisfied is determined based only on the time during which the motion condition is satisfied. However, the stop condition may be satisfied earlier as the magnitude of movement of the object detected by the non-contact sensor 21 increases.

In a modification, when it is not determined that the leaving condition is satisfied even after a certain grace period (for example, 20 minutes) has elapsed since the measured time reached the time determined in accordance with the alarm time, the sound playback part 334 may execute an urging mode, which is a mode which more strongly urges the user to wake up and get out of bed than the normal mode executed until the grace period has elapsed.

In the present modification, in the urging mode, the action-inducing sound playback processing, action sound playback processing, and background sound playback processing are performed in the same manner as in the normal mode. The action-inducing sound, action sound, and background sound are different between the urging mode and the normal mode. These sounds in the urging mode are, for example, more urgent sounds than in the normal mode. The volume of these sounds in the urging mode may be greater than in the normal mode. The snooze time Tn, pause determination time Tm, and reset time Tr in the urging mode may be shorter than in the normal mode. Furthermore, the sound stop time Ts in the urging mode may be longer than in the normal mode.

Furthermore, in a modification, when it is determined that the leaving condition is satisfied and then the bed-exit sound playback processing is executed, the determination part 333 may continue to determine whether the user has gone back to bed or not. For example, the determination part 333 continues to determine whether the user has gone back to bed or not based on the movement of an object in a predetermined region in the bed B that is smaller than the bed B, for a predetermined re-entering bed monitoring time after it is determined that the leaving condition is satisfied.

In the present modification, when the determination part 333 determines that the user has gone back to bed after the leaving condition has been satisfied, the action-inducing sound playback processing and background sound playback processing are resumed in the same manner as when the measured time reaches the time determined in accordance with the alarm time. Thus, when the determination part 333 determines that the user has gone back to bed after the leaving condition has been satisfied, the action-inducing sound playback processing and background sound playback processing are executed.

The sound playback part 334 may execute the urging mode regardless of whether the leaving condition was satisfied or not. Thus, even if the leaving condition was satisfied, if the action-inducing sound playback processing or the background sound playback processing is being executed when a predetermined grace period has elapsed after the measured time reaches the time determined in accordance with the alarm time, the sound playback part 334 may execute the urging mode.

Though preferred embodiments according to the present disclosure have been described above, the present disclosure is not limited to these embodiments, and various modifications and changes can be made within the scope of the claims.

## Claims

1. A sound playback device (1), comprising:
a clock part (331) for measuring time;
a storing part (32) configured to store an alarm time set by a user;
a detection part (21) configured to detect an object in a non-contact manner;
a calculation part (332) configured to calculate a magnitude of movement of the object based on detection results by the detection part (21);
a determination part (333) configured to determine whether a motion condition is satisfied, the motion condition being satisfied when a magnitude of movement of the object calculated by the calculation part (332) is greater than or equal to a certain magnitude; and
a sound playback part (334) configured to play a sound, wherein
the sound playback part (334) starts a first sound playback processing to play a first sound when the time measured by the clock part (331) reaches a time determined in accordance with the alarm time, and starts a second sound playback processing to play a second sound, which is different from the first sound, when the determination part (333) determines that the motion condition is satisfied during execution of the first sound playback processing.

2. The sound playback device (1) according to claim 1, wherein the sound playback part (334) reduces a volume of the first sound when it is determined that the motion condition is satisfied during playback of the first sound as compared to when it is determined that the motion condition is not satisfied.

3. The sound playback device (1) according to claim 1, further comprising a counting part (335) configured to count, during execution of the first sound playback processing, a time during which it is determined that the motion condition is satisfied by the determination part (333) as a motion time, wherein
the sound playback part (334) stops the first sound playback processing when a stop condition is satisfied, the stop condition being satisfied when the motion time reaches a first time.

4. The sound playback device (1) according to claim 3, wherein the sound playback part (334) resumes the first sound playback processing when a resumption condition is satisfied, the resumption condition including at least one of a second time having elapsed after the first sound playback processing was stopped due to satisfaction of the stop condition, and a non-motion time, during which it is determined by the determination part (333) that the motion condition is not satisfied, having reached a third time, which is shorter than the second time.

5. The sound playback device (1) according to claim 4, wherein the determination part (333) determines whether a leaving condition is satisfied based on the detection results by the detection part (21), the leaving condition being satisfied when an object moves from within a preset first region to outside the first region, and
the sound playback part (334), when it is determined by the determination part (333) that the leaving condition is satisfied, does not resume the first sound playback processing even if the resumption condition is satisfied thereafter.

6. The sound playback device (1) according to claim 5, wherein when the determination part (333) determines that the leaving condition is satisfied, the sound playback part (334) executes a third sound playback processing to play a third sound, which is different from the first sound and the second sound, and when the determination part (333) determines that the leaving condition is not satisfied, the sound playback part (334) does not execute the third sound playback processing even if the stop condition is satisfied.

7. The sound playback device (1) according to any one of claims 3 to 6, wherein the determination part (333) determines whether a leaving condition is satisfied based on the detection results by the detection part (21), the leaving condition being satisfied when an object moves from within a preset first region to outside the first region, and
the sound playback part (334):
starts a fourth sound playback processing to play a fourth sound when the time measured by the clock part (331) reaches a time determined in accordance with the alarm time,
stops the first sound playback processing when the stop condition is satisfied or when it is determined that the leaving condition is satisfied during the playback of the first sound, and
stops the fourth sound playback processing when it is determined that the leaving condition is satisfied during playback of the fourth sound.

8. The sound playback device (1) according to any one of claims 3 to 7, wherein the sound playback part (334) changes the first time based on the time during which it is determined by the determination part (333) that the motion condition is not satisfied after the counting part (335) starts counting the motion time.

9. The sound playback device (1) according to any one of claims 3 to 8, wherein the sound playback part (334) plays the second sound a plurality of times during execution of the second sound playback processing from when the second sound playback processing starts until the first sound playback processing is stopped due to the stop condition being satisfied,
the second sounds played a plurality of times are at least partially different sounds from each other, and
the sound playback part (334) changes the second sound in accordance with the motion time.

10. The sound playback device (1) according to any one of claims 3 to 9, wherein the sound playback part (334) plays the second sound a plurality of times during execution of the second sound playback processing from when the second sound playback processing starts until the first sound playback processing is stopped due to the stop condition being satisfied, and
the sound playback part (334) plays the second sound such that as a number of times the second sound has already been played during execution of the second sound playback processing increases, the time during which it is determined by the determination part (333) that the motion condition is satisfied between one of the second sounds and the next second sound to be played becomes longer.

11. The sound playback device (1) according to claim 1 or 2, further comprising a counting part (335) configured to count, during execution of the first sound playback processing, a time during which it is determined that the motion condition is satisfied by the determination part (333) as a motion time, wherein
the sound playback part (334) plays the second sound a plurality of times during the execution of the second sound playback processing, and the plurality of second sounds are at least partially different from each other, and
the sound playback part (334) changes the second sound in accordance with the motion time.

12. The sound playback device (1) according to claim 11, wherein the counting part (335) resets the motion time to zero when the time, during which it is determined by the determination part (333) that the motion condition is not satisfied, reaches a fourth time after the counting part (335) starts counting the motion time.

13. The sound playback device (1) according to any one of claims 1 to 12, wherein the calculation part (332) calculates a magnitude of movement of an object in a second region, which is narrower than a detection range of the detection part (21), based on detection results by the detection part (21).

14. The sound playback device (1) of any one of claims 1 to 13, wherein the detection part (21) includes a millimeter wave sensor,
the millimeter wave sensor emits a radio wave signal and receives a reflected signal of the radio wave signal, and
the calculation part (332) calculates a magnitude of movement of an object based on at least one of a distance from the millimeter wave sensor to the object within a detection range, a direction in which the object is located relative to the millimeter wave sensor, and a relative speed of the object relative to the millimeter wave sensor, detected based on the radio wave signal and the reflected signal.

15. A sound playback method, comprising:
measuring time;
storing an alarm time set by a user;
detecting an object in a non-contact manner;
calculating a magnitude of movement of the object based on detection results of the object;
determining whether a motion condition is satisfied, the motion condition being satisfied when a magnitude of movement of the object is greater than or equal to a certain magnitude; and
starting a first sound playback processing to play a first sound when the measured time reaches a time determined in accordance with the alarm time, and starting a second sound playback processing to play a second sound, which is different from the first sound, when it is determined that the motion condition is satisfied during the execution of the first sound playback processing.
